# EUROPÄISCHE PATENTSCHRIFT

(11) **EP 2 980 937 B1**
(45) Veröffentlichungstag und Bekanntmachung des Hinweises auf die Patenterteilung: **12.10.2016**
(21) Anmeldenummer: 14002647.7
(22) Anmeldetag: 30.07.2014
(51) Int. Cl.: H01B 11/18, H01B 13/016, H02G 1/12

(54) **Verfahren und Vorrichtung zum Herstellen eines geschirmten Kabels sowie ein geschirmtes Kabel**
Method and device for producing a shielded cable and shielded cable
Procédé et dispositif de fabrication d'un câble blindé et câble blindé

(43) Veröffentlichungstag der Anmeldung: 03.02.2016
(73) Patentinhaber: MD Elektronik GmbH, 84478 Waldkraiburg (DE)
(72) Erfinder: Friesinger, Johann, 83562 Rechtmehring (DE)
(74) Vertreter: Hofmann, Ernst

(56) Entgegenhaltungen:
- JP-A- 2012 050 169
- US-A- 4 719 697
- US-A1- 2002 050 062
- US-A1- 2007 173 122
- US-A1- 2012 285 715

## Beschreibung

Die Erfindung betrifft ein Verfahren zur Herstellung eines konfektionierten geschirmten Kabels, welches insbesondere einen Steckverbinder umfasst, zur Übertragung von HF-Signalen gemäß dem Anspruch 1. Weiterhin umfasst die Erfindung eine Vorrichtung zum Herstellen bzw. Konfektionieren eines derartigen Kabels gemäß dem Anspruch 7 sowie ein mit dem Verfahren beziehungsweise mit der Vorrichtung hergestelltes Kabel nach Anspruch 11.

Die betreffenden Kabel sind etwa in Kraftfahrzeugen oder Luftfahrzeugen einsetzbar und werden meist in großen Stückzahlen benötigt. Zur kostengünstigen Bereitstellung entsprechender Kabel sind ein einfacher Aufbau und eine einfache Konfektionierbarkeit von großer Bedeutung. Hinzu kommt, dass solche Kabel elektromagnetisch gut geschirmt sein müssen, damit keine abgestrahlten elektromagnetischen Wellen beispielsweise in der Bordelektronik des betreffenden Fahrzeugs Störungen verursachen können. Weiterhin müssen derartige Kabel so hergestellt sein, dass mit diesen Signale mit sehr hoher Frequenz übertragen werden können, wie dies zum Beispiel für eine qualitativ hochwertige Videosignalübertragung erforderlich ist. Vorteilhaft ist zudem eine Bauweise, welche einen kleinen Einbauraum erfordert, insbesondere enge Biegeradien des Kabels im Bereich der Steckverbinder ermöglicht.

### STAND DER TECHNIK

In der EP 2 523 275 A1 der Anmelderin ist ein geschirmtes Kabel und eine Vorrichtung zur Herstellung eines derartigen Kabels gezeigt. Zudem ist in der EP 2 523 275 A1 ein zugehöriges Herstellungsverfahren offenbart. Das entsprechende vorbekannte Kabel weist einen Schirm auf, der um eine Stützschelle herum umgeschlagen ist.

Ebenso geht aus dem Inhalt der Patentschrift DE 10 2012 020 798 B3 die technische Lehre hervor den Schirm um eine Stützschelle mit einer dafür konstruierten Vorrichtung umzuschlagen.

In der US 2002/0050062 A1 und in der JP 2012050169 Verfahren zum Bearbeiten eines Endes eines geschirmten Kabels offenbart sind.

### ZUSAMMENFASSUNG DER ERFINDUNG

Der Erfindung liegt die Aufgabe zugrunde, ein Verfahren zur Herstellung von qualitativ hochwertigen Kabeln zu schaffen, welches erlaubt Kabel mit vergleichsweise geringem Herstellungsaufwand zu produzieren, wobei die derart hergestellten Kabel eine hohe EMV-Dichtigkeit aufweisen und zur Übertragung hoher Datenraten präzise fertigbar sind. Außerdem umfasst die Erfindung auch eine neuartige Vorrichtung zur Herstellung von derartigen qualitativ hochwertigen Kabeln und nach dem Verfahren hergestellte Kabel.

Diese Aufgabe wird erfindungsgemäß durch die Merkmale der Ansprüche 1, 7 beziehungsweise des Anspruchs 11 gelöst.

Erfindungsgemäß umfasst das Verfahren zur Herstellung eines Kabels, welches zumindest eine Ader, einen Schirm, einen Mantel und eine an den Schirm elektrisch kontaktierte Hülse aufweist, folgende Schritte:
- Entfernen des Mantels an einem Ende des Kabels, so dass dort der Schirm freigelegt ist,
- Anbringen einer Stützschelle in einer Weise, dass die Stützschelle mit dem Schirm elektrisch kontaktiert ist und am Ende des Schirms ein Überstand aus der Stützschelle axial heraus ragt, wobei der von der Stützschelle umgebene Schirm einen radialen Abstand B zur Außenkontur der Stützschelle aufweist,
- Abtrennen des Endes des Schirms in einer Weise, dass nach dem Abtrennen die Länge des Überstands kürzer ist als der radiale Abstand B wenn der Schirm radial nach außen gestülpt ist, wobei das Abtrennen mit Hilfe zumindest einer rotierenden Schneide eines Werkzeug, die um die Längsachse der Enden der Kabels erfolgt.
- Montieren der Hülse, so. dass die Hülse radial außerhalb der Stützschelle angeordnet ist und mit der Stützschelle elektrisch kontaktiert ist und mit der Stützschelle elektrisch kontaktiert ist.

Dementsprechend ist der Schirm so kurz abgetrennt, dass dieser nicht um die Stützschelle herum umgestülpt werden kann, also nicht über den Außendurchmesser der Stützschelle hinaus ragt, auch wenn der Schirm umgestülpt ist. Insbesondere kann der Schirm so kurz abgetrennt sein, dass der Überstand kleiner ist als die Materialstärke beziehungsweise die Wandstärke der Stützschelle.

Die Formulierung wonach nach dem Abtrennen die Länge des Überstands kürzer ist als der Außendurchmesser der Stützschelle umfasst auch ein Verfahren, bei dem der Überstand am Ende dieses Verfahrensschritts Null ist, also der Überstand vollständig entfernt wird. Eine vollständige Entfernung des Überstands kann beispielsweise dadurch erreicht werden, wenn die bezüglich des Schirms benachbarte radial innen liegende Lage des Endes des Kabels zumindest (radial) teilweise materialabtragend entfernt werden kann.

Als Abtrennen kann ein Prozess verstanden werden, bei dem der Zusammenhalt des Schirms, der zum Beispiel aus einem Drahtgeflecht besteht, örtlich aufgehoben wird. Beispielsweise kann für das Abtrennen ein spanender Prozess gewählt werden, bei dem das Ende des Schirms unter Bildung von Spänen mechanisch abgetrennt wird.

In einer bevorzugten Variante weist das Kabel mehrere Adern auf.

Mit Vorteil dient beim Abtrennen die Stützschelle als Abstützung für den Schirm zur Aufnahme von Bearbeitungskräften. Insbesondere kann beim Abtrennen ein Werkzeug gegen die Stirnseite der Stützschelle axial, also entlang der Längsachse, bewegt werden, so dass das Werkzeug das Ende des Schirms gegen die Stirnseite drückt.

In weiterer Ausgestaltung der Erfindung wird die Stützschelle mit einem Crimpprozess angebracht. Auf diese Weise kann die Stützschelle mit dem Schirm elektrisch kontaktiert werden und insbesondere auch mechanisch an dem Ende des Kabels fixiert werden.

Beispielsweise kann als Werkzeug ein Fräser, insbesondere ein Schaftfräser beziehungsweise ein Planfräser verwendet werden. Demgemäß kann insbesondere das Abtrennen des Endes des Schirms durch einen Fräsprozess vorgenommen werden.

In vorteilhafter Weise wird durch das Werkzeug die dem Ende des Kabels zugewandte Stirnseite der Stützschelle materialabtragend bearbeitet. Beispielsweise kann (insbesondere in einem Arbeitsgang) die Stirnseite der Stützschelle spanend plan abgefräst werden, nachdem das Ende des Schirms abgetrennt worden ist. Die Bearbeitungskräfte werden also bei diesem materialabtragenden spanenden Prozess in die Stützschelle eingeleitet.

In Weiterbildung der Erfindung wird vor dem Abtrennen des Schirms mit Hilfe eines Antriebs ein Rohr entlang der Längsachse des Endes des Kabels relativ zum Werkzeug bewegt. Die Bewegung kann mit Vorteil durch einen elektrischen Antrieb eingeleitet werden. Der Innendurchmesser des Rohrs ist kleiner als der Außendurchmesser des Schirms aber größer als eine radial innerhalb des Schirms liegende Folie. Infolgedessen geht die Bewegung des Rohrs entlang der Längsachse mit einer Aufweitung des Schirms einher. Vorzugsweise wird das Rohr solange entlang der Längsachse bewegt bis dessen Ende kurz (beispielsweise nur Bruchteile eines Millimeters) vor der Stirnseite der Stützschelle positioniert ist.

Im Anschluss daran kann vorteilhafterweise das Abtrennen mit Hilfe eines Werkzeugs erfolgen, wobei das Werkzeug eine Bohrung aufweist und das Rohr innerhalb der Bohrung angeordnet ist. Zum Abtrennen wird dann das Werkzeug entlang der Längsachse des Endes des Kabels relativ zum Rohr bewegt. Das Rohr dient also einerseits zum Aufweiten des Schirms im Sinne eines Stülprohrs, andererseits dient es zur Führung des Werkzeugs entlang der Längsachse des Endes des Kabels sowie als Schutzeinrichtung gegen Beschädigungen des Kabels, insbesondere der Ader oder der Adern, während des Abtrennens des Schirms. Bevorzugt wird das Rohr (wie auch das Kabel) nicht rotieren, wogegen während des Abtrennens das Werkzeug rotieren kann.

Als Bohrung ist im Folgenden eine Ausnehmung zu verstehen, deren nach innen weisende Oberfläche nicht unbedingt eine geschlossene Oberfläche sein muss. Vielmehr ist als Bohrung ein freies Volumen oder ein Hohlraum im Werkzeug zu verstehen.

In Weiterbildung der Erfindung können Enden der zumindest einen Ader abgetrennt werden, wobei für die verbleibende Länge der zumindest einen Ader die dem Ende des Kabels zugewandte Stirnseite der Stützschelle als Referenz dient. Die betreffende Stirnseite, die beispielsweise materialabtragend und entsprechend präzise hergestellt wurde, kann dementsprechend als Ausgangsfläche beziehungsweise Referenzfläche zur genauen Festlegung der Position einer Schnittline und damit zur präzisen Festlegung der verbleibenden Restlänge der Ader beziehungsweise der Adern dienen.

Die Erfindung betrifft auch eine Vorrichtung zum Herstellen eines Kabels, das zumindest eine Ader und einen Schirm aufweist. Die Vorrichtung umfasst ein Haltelement zum (insbesondere klemmenden) Halten eines Endes des Kabels an einem Außendurchmesser wobei dieser Außendurchmesser größer ist als der Innerdurchmesser der Bohrung des Werkzeugs, so dass die Längsachse des Endes des Kabels eine definierte Orientierung im Raum aufweist. Weiterhin umfasst die Vorrichtung ein Werkzeug welche eine Bohrung zur Aufnahme des Endes des Kabels aufweist und das als ein Fräser ausgestaltet ist, welches zumindest eine Schneide zum Abtrennen des Schirms aufweist, wobei die zumindest eine Schneide um die Längsachse des Endes des Kabels mit Hilfe eines Antriebs drehbar ist und mit Hilfe eines Vorschubantriebs eine Relativbewegung parallel zur Längsachse zwischen der zumindest einen Schneide und dem Ende des Kabels erzeugbar ist.

Demzufolge weist das Werkzeug eine Drehachse auf, die in der Vorrichtung mit der Längsachse des Endes des Kabels deckungsgleich zusammenfällt. Als Antriebe kommen beispielsweise pneumatische Antriebe oder elektrische Antriebe in Betracht. Insbesondere ist es vorteilhaft, wenn das Werkzeug durch einen elektrischen Antrieb in Rotation versetzt wird und der Vorschubantrieb ebenfalls als elektrischer Motor ausgestaltet ist. Ebenso kann das Halteelement durch einen Antrieb bewegbar sein, wobei in dieser Anwendung vorzugsweise ein pneumatischer Antrieb verwendet wird.

Vorzugsweise ist innerhalb der Bohrung des Werkzeugs ein Rohr angeordnet, wobei das Werkzeug entlang der Längsachse des Endes des Kabels relativ zum Rohr bewegbar ist. Zur Herstellung der Bewegbarkeit des Rohrs entlang der Längsachse weist die Vorrichtung bevorzugt einen Antrieb auf, der diese lineare Bewegung erzeugt. Der Antrieb zur Bewegung des Rohrs ist mit Vorteil als ein elektrischer Antrieb ausgestaltet.

In vorteilhafter Weise ist die zumindest eine Schneide derart ausgestaltet, dass diese für eine materialabtragende Bearbeitung einer Stützschelle aus einem Metallwerkstoff, beispielsweise einem Bronze-Werkstoff, geeignet ist.

Mit Vorteil weist die Vorrichtung zudem ein Anschlagelement auf, welches so ausgestaltet ist, dass es mit einer dem Ende des Kabels zugewandten Stirnseite einer Stützschelle in Anschlag bringbar ist. Weiterhin kann dann die Vorrichtung eine Abtrennvorrichtung aufweisen, wobei die Abtrennvorrichtung zum Abtrennen der einen Ader oder der mehreren Adern entlang einer Abtrennlinie ausgebildet. Zudem ist die Abtrennvorrichtung relativ zum Anschlagelement definiert positioniert ist, so dass die Abtrennlinie in einem definierten Abstand zum Anschlagelement verläuft.

Die Erfindung betrifft auch ein nach dem erfindungsgemäßen Verfahren hergestelltes Kabel, das zumindest eine Ader, einen Schirm, einen Mantel und eine an den Schirm elektrisch kontaktierte Hülse aufweist, wobei eine Stützschelle mit dem Schirm elektrisch kontaktiert und an diesem mechanisch befestigt ist.

In vorteilhafter Weise ist die dem Ende des Kabels zugewandte Stirnseite der Stützschelle materialabtragend bearbeitet. Derartige Kabel sind beispielsweise durch entsprechende Bearbeitungsmarken auf der Oberfläche der dem Ende des Kabels zugewandte Stirnseite der Stützschelle leicht erkennbar.

In einer bevorzugten Variante weist das Kabel mehrere Adern auf.

In weiterer Ausgestaltung der Erfindung weist das Kabel vier Adern, die miteinander verdrillt sind, auf. Insbesondere kann das Kabel nach einem SternVierer-Konzept aufgebaut sein.

Mit Vorteil ist die Hülse unmittelbar mit der bezüglich der Hülse radial innen liegenden Stützschelle kontaktiert. Demzufolge ist der Schirm des Kabels nicht umgeschlagen beziehungsweise umgestülpt, so dass zwischen der Stützschelle und der Hülse keine Schirmlage vorliegt. Die Hülse umschließt die Stützschelle unter direktem unmittelbaren Kontakt.

Gemäß einem weiteren Aspekt umfasst die Erfindung ein Kabel, welches eine Ader oder mehrere Adern, einen Schirm, einen Mantel und eine an den Schirm elektrisch kontaktierte Hülse aufweist, wobei eine Stützschelle mit dem Schirm elektrisch kontaktiert ist, wobei die dem Ende des Kabels zugewandte Stirnseite der Stützschelle materialabtragend bearbeitet ist.

Durch die Erfindung ist es möglich qualitativ hochwertige Kabel herzustellen, die eine hohe EMV-Dichtigkeit aufweisen und zur Übertragung hoher Datenraten präzise fertigbar sind. Insbesondere können durch die Erfindung HF-Signale mit hoher Datenrate übertragen werden. Unter HF-Signalen sind im folgenden Signale zu verstehen, die mit Hilfe von Hochfrequenz-Technik erzeugt wurden, also beispielsweise auch UHF- oder VHF-Signale. Insbesondere zählen hierzu auch digitale Signale. Diese sind mit den Kabeln mit einer Datenrate größer gleich 10 MBit/s übertragbar.

Infolge der präzisen Fertigbarkeit kann die Länge des in der Hülse positionierten Endes der Ader minimiert werden beziehungsweise können die Längen der in der Hülse positionierten Enden der Adern minimiert werden, so dass auch die Länge der Hülse selbst reduziert werden kann. Das hat nicht nur Vorteile im Hinblick auf eine Materialersparnis sondern ermöglicht auch eine platzsparende Verwendung des Kabels bei beengten Einbauverhältnissen insbesondere beim Einbau in Fahrzeugen.

Vorteilhafte Ausbildungen der Erfindung entnimmt man den abhängigen Ansprüchen.

Weitere Einzelheiten und Vorteile des erfindungsgemäßen Kabels ergeben sich aus der nachfolgenden Beschreibung eines Ausführungsbeispiels anhand der beiliegenden Figuren.

### KURZE BESCHREIBUNG DER ZEICHNUNGEN

Es zeigen die
- Figur 1: eine Seitenansicht eines Kabels mit einem Schneidwerkzeug zu Beginn der Verarbeitung,
- Figur 2: eine Seitenansicht des Kabels an dessen Ende der Schirm freigelegt ist,
- Figur 3: eine Seitenansicht des Kabels an dem eine Stützschelle angebracht ist,
- Figur 4: eine Seitenansicht des Kabels, welches sich in einer Vorrichtung zum weiteren Bearbeiten befindet,
- Figur 5: eine Seitenansicht des Kabels in der Vorrichtung mit aufgeweitetem Schirm,
- Figur 6: eine Seitenansicht des Kabels mit einem Werkzeug vor dem Abtrennen des Schirms,
- Figur 7a: eine Seitenansicht des Kabels mit dem Werkzeug in einer Endstellung,
- Figur 7b: eine axiale Ansicht des Werkzeugs,
- Figur 8a: eine Seitenansicht des Kabels mit abgetrenntem Schirm,
- Figur 8b: eine stirnseitige Ansicht des Kabels mit abgetrenntem Schirm,
- Figur 9: eine Seitenansicht des Kabels mit abgetrennter elektrisch leitender Folie,
- Figur 10: eine Seitenansicht des Kabels mit einer Schneidvorrichtung vor dem Abtrennen der Enden der Adern,
- Figur 11: eine Seitenansicht des Kabels mit montierter Hülse,

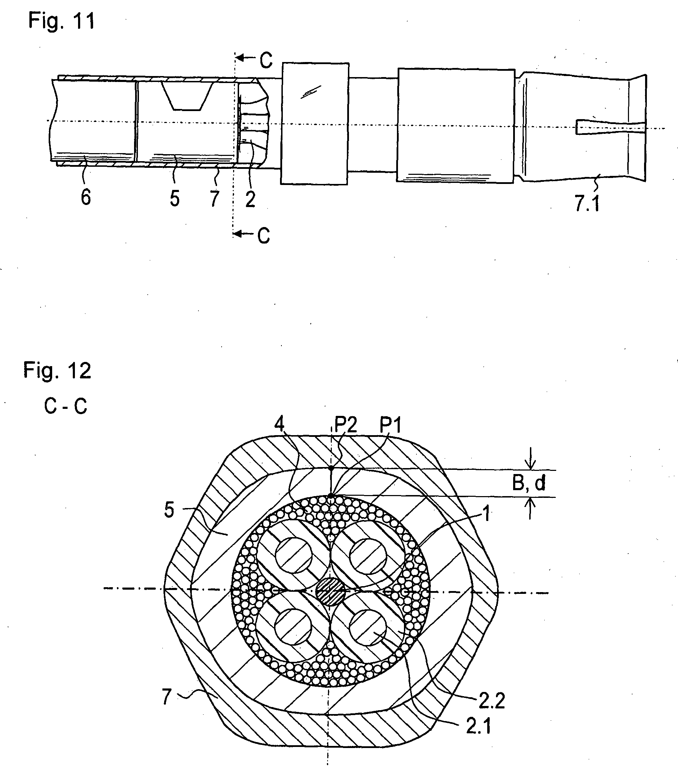

- Figur 11: eine vergrößert dargestellte Querschnittansicht des Kabels mit montierter Hülse.

### BESCHREIBUNG DER AUSFÜHRUNGSFORMEN

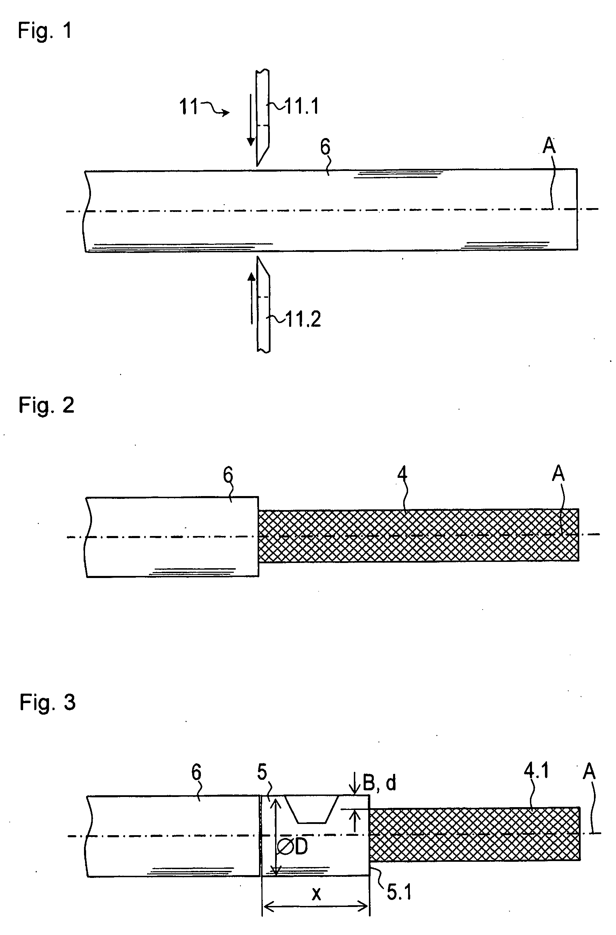

In der Figur 1 eine Seitenansicht eines Ende eines Kabels gezeigt, welches bearbeitet beziehungsweise konfektioniert werden soll. In dieser Abbildung ist vom Kabel nur ein äußerer Mantel 6 erkennbar, wobei der Mantel 6 aus elektrisch isolierendem Material hergestellt ist.

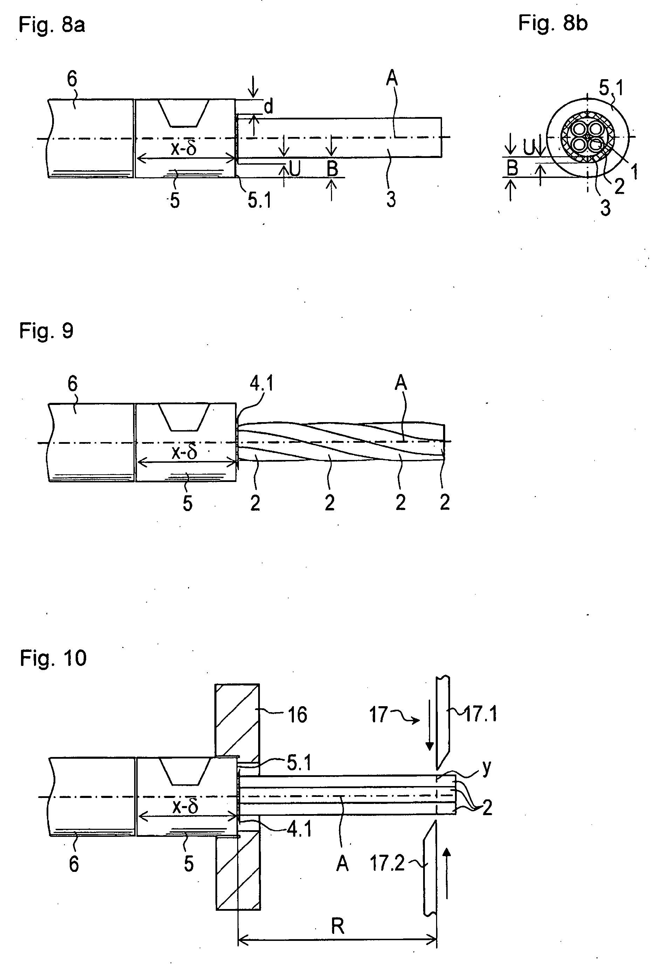

Das Kabel weist im vorgestellten Ausführungsbeispiel (siehe z. B. die Figuren 8b oder 12) zentral einen Füller 1 aus isolierendem Material auf, um den herum vier Adern 2 gedreht angeordnet sind. Die Adern 2 umfassen jeweils einen innen liegenden Leiter 2.1 sowie eine Isolierung 2.2, wobei jeder der Leiter 2.1 von einer Isolierung 2.2 umgeben ist. Radial außerhalb bezüglich der Adern 2 befindet sich zunächst eine elektrisch leitende Folie 3 und ein Schirm 4, hier in Form eines Schirmgeflechts. Der Schirm 4 wird über die überwiegende Kabellänge vom isolierenden Mantel 6 umschlossen. Derartige Kabel werden häufig als Sternvierer bezeichnet. Die vier Adern 2 sind miteinander verdrillt, wodurch eine hohe Übersprechdämpfung erreichbar ist. Das Kabel weist im Bereich seines Endes die Längsachse A auf.

Im Zuge der Konfektionierung wird das Ende des Kabels zunächst in einer Vorrichtung zum Herstellen des konfektionierten Kabels mit einem Schneidwerkzeug 11 bearbeitet (Figur 1). Das Schneidwerkzeug umfasst zwei Schneidklingen 11.1, 11.2, die eine V-förmige Form zum Umgriff des Mantels 6 aufweisen. Um den Mantel 6 zu scheiden werden die Schneidklingen 11.1, 11.2 orthogonal zur Längsachse A einander angenähert, bis die Schneidklingen 11.1, 11.2 mit genügender Tiefe in den Mantel 6 eingedrungen sind. Danach wird das Ende des Mantels 6 in axialer Richtung abgezogen, so dass schließlich gemäß der Figur 2 der Mantel 6 an einem Ende des Kabels entfernt ist und dort der innen liegende Schirm 4 freigelegt ist.

Das Abziehen des Mantels 6 kann auch zweistufig erfolgen, so dass der Schirm 4 freigelegt ist, aber das Ende des Mantels 6 noch nicht vollständig angezogen wird, so dass für die weitere Bearbeitung vorrübergehend das Ende des Schirms 4 zusammen gehalten wird.

Darauffolgend wird um den Schirm 4 eine elektrisch leitfähige Stützschelle 5, die im vorgestellten Ausführungsbeispiel aus einem mit Zinn beschichteten Bronzewerkstoff hergestellt ist, gepresst beziehungsweise gecrimpt (Figur 3), so dass die Stützschelle 5 mit dem Schirm 4 elektrisch kontaktiert ist und auch mechanisch fest mit dem Schirm 4 verbunden ist. Die Stützschelle 5 weist eine im Wesentlichen zylindrische beziehungsweise hohlzylindrische Form auf mit einer axialen Ausdehnung x, einem Außendurchmesser D und einer Wandstärke d. Weiterhin weist der von der Stützschelle 5 umgebene Schirm 4 einen radialen Abstand B zur Außenkontur der Stützschelle 5 auf (siehe auch die Figuren 8a, 8b). Im vorliegenden Fall sind der radiale Abstand B und die Wandstärke d gleich groß, da zwischen dem Schirm 4 und der Innenseite der Stützschelle 5 keine Zwischenlage angeordnet ist. Durch das Crimpen der Stützschelle 5 kann diese im Querschnitt eine Außenkontur aufweisen, die genau genommen von einem Kreisring abweicht. Der Abstand B ist jedenfalls der Abstand gemessen von der äußeren Umhüllenden des Schirms 4 (in der Stützschelle 5 in der Nähe der Stirnseite 5.1) bis zu einem radial außerhalb liegenden Punkt auf der Außenkontur der Stützschelle 5 (siehe auch die Figur 12)

Zudem weist die Stützschelle 5 eine dem Ende des Kabels zugewandte Stirnseite 5.1 auf sowie in Axialrichtung gegenüber liegend eine weitere Stirnseite, die dem Mantel 6 zugewandt ist. Am Ende des Schirms 4 ragt ein Überstand 4.1 des Schirms 4 aus der Stützschelle 5 axial heraus.

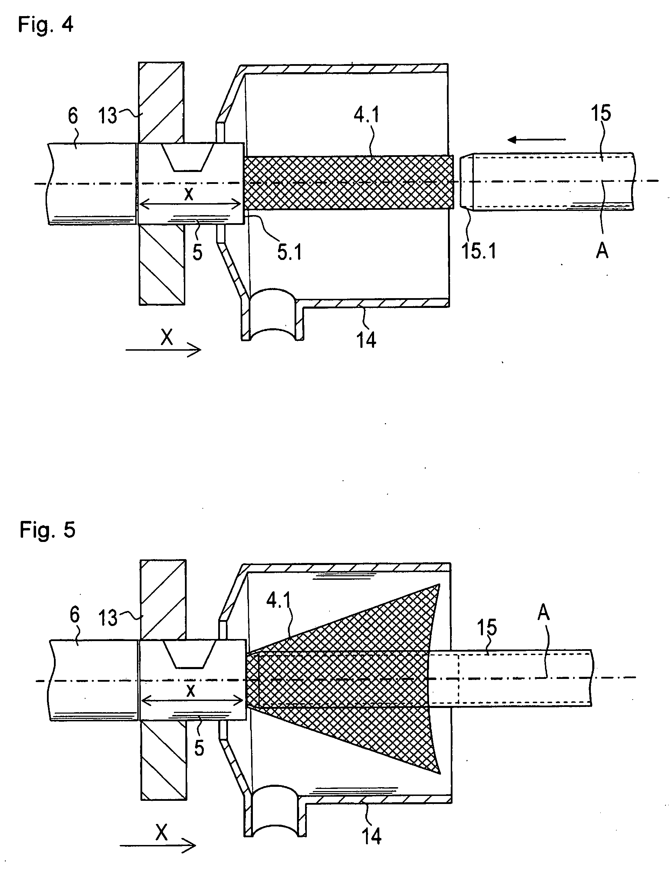

In einem darauffolgenden Schritt der Herstellung beziehungsweise Konfektionierung des Kabels wird das Kabel gemäß der Figur 4 in der Vorrichtung unter Verwendung eines Haltelements 13 eingespannt, wobei das Haltelement 13 am Außenumfang der Stützschelle 5 angreift. Im vorliegenden Ausführungsbeispiel ist das Haltelement 13 als zwei zueinander senkrecht zur Längsachse A bewegbare Klemmbacken ausgestaltet, wobei die Bewegbarkeit der Klemmbacken durch einen pneumatischen Antrieb, welcher Bestandteil der Vorrichtung ist, erreicht wird. Das Ende des Kabels wird durch das Haltelement so fixiert, dass die Längsachse A des Endes des Kabels eine definierte Orientierung aufweist, nämlich eine Orientierung parallel zur Richtung X.

Weiterhin umfasst die Vorrichtung zum Herstellen des Kabels eine Absaughaube 14, in welche das Ende des Kabels eingeführt wird. In dieser Position ist die Stirnseite 5.1 der Stützschelle 5 und zumindest teilweise der Überstand 4.1 des Schirms 4 im Wirkbereich der Absaughaube 14.

Außerdem weist die Vorrichtung zum Herstellen des Kabels ein Rohr 15 auf, das axial, also entlang der Längsachse A, in Richtung der Stützschelle 5 verfahrbar ist. Der Innendurchmesser des Rohrs 15 ist kleiner als der Außendurchmesser des Schirms 4 im Bereich des Überstands 4.1, insbesondere nicht größer als der Innendurchmesser des Schirms 4 im Bereich des Überstands 4.1. Das Rohr 15 weist zudem an der zum Ende des Kabels orientierten Stirnseite eine Fase auf, so dass das Rohr 15 sozusagen eine umlaufende Schneide 15.1 aufweist. Optional kann das Ende des Schirms 4, beispielsweise durch einen Luftstoß, vorbereitend etwas aufgeweitet werden, bevor das Rohr 15 unter den Schirm 4 eingreift.

Gemäß der Figur 5 wird dann das Rohr 15 axial zur Stützschelle 5 hin bewegt, wobei das Rohr 15 bezüglich des Schirms 4 innen liegend eingreift und den Schirm 4 aufweitet. Das Rohr 15, welches im vorliegenden Beispiel auch als Stülprohr bezeichnet werden könnte, wird so lange mit Hilfe eines dafür in der Vorrichtung vorgesehenen Antriebs axial verfahren, bis es in die Nähe der Stirnseite 5.1 der Stützschelle 5 gelangt.

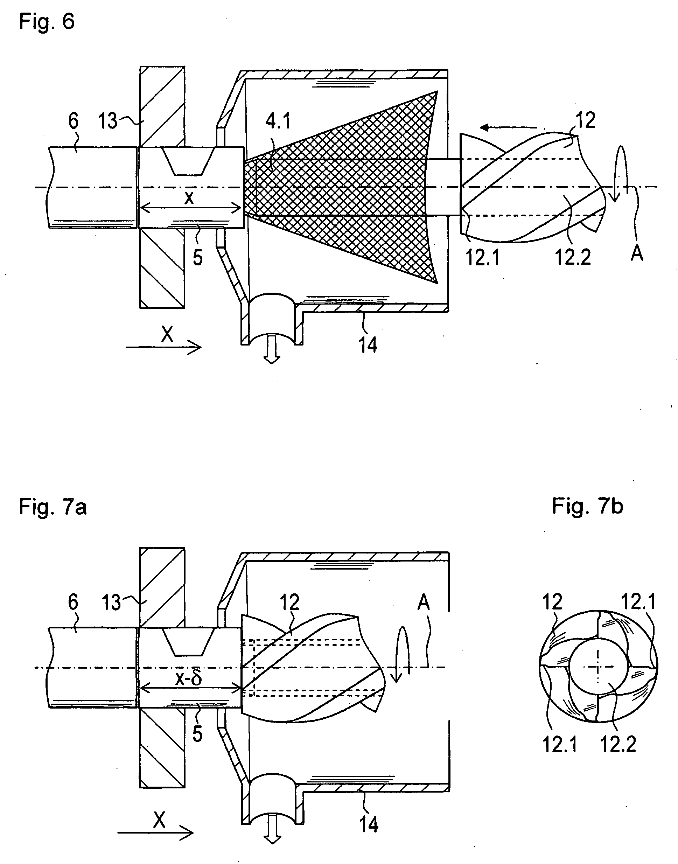

Ferner umfasst die Vorrichtung zum Herstellen des Kabels gemäß den Figuren 6 und 7b ein Werkzeug 12, das mehrere Schneiden 12.1 aufweist. Das Werkzeug 12 hat eine zentrale Bohrung 12.2, wobei der Innendurchmesser der Bohrung 12.2 geringfügig größer ist als der Außendurchmesser des Rohrs 15. Das Rohrs 15 ist nun so angeordnet, dass es in die Bohrung 12.2 ragt, wobei das Werkzeug 12, welches hier als Stirnfräser ausgestaltet ist, axial relativ zum Rohr 15 bewegbar ist. Das Rohr 15 dient sozusagen als axiale Führung für das Werkzeug 12. Die Vorrichtung zum Herstellen des Kabels umfasst zudem einen in den Figuren nicht dargestellten Antrieb, welcher eine Drehbewegung des Werkzeugs 12 erzeugt. Ein weiterer Antrieb der Vorrichtung dient als Vorschubantrieb, der das Werkzeug 12 in und entgegen der Richtung X bewegen kann, also entlang der Längsachse A.

Im Zuge der weiteren Bearbeitung wird der entsprechende elektrische Anrieb aktiviert und das Werkzeug 12 in Rotation um die Längsachse A versetzt, wobei sich das Rohr 15 nicht dreht, so dass folglich das Werkzeug 12 relativ zum Rohr 15 rotiert. Sowohl das Rohr 15 als auch das Werkzeug 12 sind bezüglich der Längsachse A des Endes des Kabels koaxial zueinander positioniert. Demgemäß rotieren die Schneiden 12.1 des Werkzeugs 12 um die Längsachse A des Endes des Kabels.

Das rotierende Werkzeug 12 wird dann axial entlang des Rohrs 15 zur Stützschelle 5 hin verschoben. In der Folge wird der Schirm 4 verformt und zerschnitten. Die abgetrennten Teile des Schirms 4 werden mit Hilfe einer Absaugung, die mit der Absaughaube 14 zusammenwirkt, entfernt. Somit dient das Rohr 15 nicht nur als Führung für das Werkzeug 12 und als Mittel zum Aufweiten des Schirms 4, sondern auch als Schutz der bezüglich des Schirms 4 innen liegenden Teile des Endes des Kabels.

Das Werkzeug 12 wird so weit axial bewegt, dass die dem Ende des Kabels zugewandte Stirnseite 5.1 der Stützschelle 5 materialabtragend bearbeitet wird. Dabei kann der Materialabtrag minimal sein, beispielsweise 0,1 mm. Somit weist nun die Stützschelle 5 eine axiale Ausdehnung von x-δ auf, wobei im gezeigten Beispiel 8 = 0,1 mm beträgt. In dieser Position gemäß der Figur 7a ist das Ende des Schirms 4 abgetrennt. Während des Abtrennenes des Schirms 4 dient die Stützschelle 5 als Abstützung für den Schirm 4 zur Aufnahme von Bearbeitungskräften. Mit anderen Worten wird die zur Vorschubkraft des Werkzeugs 12 erforderliche Gegenkraft in axialer Richtung von der Stützschelle 5 aufgebracht, so dass sich der Schirm 4 bei der Bearbeitung in axialer Richtung an der Stützschelle 5 abstützt. Die Bearbeitungskräfte werden über Stützschelle 5 in das Haltelement 13 geleitet.

In den Figuren 8a und 8b ist das Ende des Kabels nach dem Abtrennen des Schirms 4 gezeigt, wobei das Abtrennen so vorgenommen wurde, dass nun die Länge U des verbliebenen Überstands 4.1 kürzer ist als der radiale Abstand B wenn der Schirm 5 wie in der Figur 8b radial nach außen gestülpt ist.

Die dem Ende des Kabels zugewandte Stirnseite 5.1 ist nunmehr eine bearbeitete Fläche und erfüllt demgemäß höchste Ansprüche im Hinblick auf deren Präzision, beispielsweise im Hinblick auf deren Planheit. Der Überstand 4.1 ist also so kurz, dass der Schirm 4 auf keinen Fall so umgestülpt werden kann, dass der Außenumfang der Stützschelle 5 vom Schirm 4 erreicht werden könnte.

Das Rohr 15 der Vorrichtung zum Herstellen des Kabels dient nicht nur zur axialen Führung des Werkzeugs 12, sondern auch zum Schutz der bezüglich des Schirms 4 beziehungsweise des Überstands 4.1 innen liegenden Schichten. Im vorliegenden Fall grenzt die elektrisch leitfähige Folie 3 innen an den Schirm 4. Dementsprechend ist in der Figur 8a die Folie 3 zu sehen, welche beim Abtrennen des Überstands 4.1 in keinster Weise beschädigt wurde.

Als nächstes wird die Folie 3 entfernt, so dass die Adern, wie in der Figur 9 dargestellt, freigelegt sind. Im Übrigen kann das Verfahren auch bei Kabeln angewendet werden, die radial außerhalb des Schirms 4 eine Folie aufweisen. In diesem Fall würde die Folie zusammen mit dem Schirm abgetrennt beziehungsweise zerspant.

Die verdrillten Adern 2 werden jetzt gestreckt und abgelängt. Auf diese Weise soll ein so genanntes "Nullmaß" hergestellt werden, was für die Produktion hochwertiger Kabel höchst genau erfolgen muss. Die Vorrichtung zum Herstellen des Kabels verfügt deshalb über einen Anschlag 16 und eine in Richtung X versetzt zum Anschlag 16 angeordnete Schneidvorrichtung 17. Die Schneidvorrichtung 17 umfasst zwei Klingen 17.1, 17,2 durch welche die Enden der Adern 2 abgetrennt werden können. Die Schnittlinie befindet sich in einem vorgegebenen und genau eingestellten Abstand R zum Anschlag.

Im Zuge des Abtrennprozesses der Enden der Adern 2 wird gemäß der Figur 10 zunächst die dem Ende des Kabels zugewandte Stirnseite 5.1, also die bearbeitete Stirnseite 5.1, in unmittelbaren Berührkontakt mit dem Anschlag 16 gebracht. Dadurch, dass der Überstand 4.1 so kurz ist, kann ausgeschlossen werden, dass der Schirm 4 oder nur Teile davon zwischen dem Anschlag 16 und der Stützschelle 5 beziehungsweise deren Stirnseite 5.1 liegen. Alleine deshalb kann ein überaus genaues Herstellen des Nullmaßes erfolgen. Zudem ist im vorgestellten Ausführungsbeispiel die Stirnseite 5.1 materialabtragend bearbeitet und daher äußerst präzise hergestellt, so dass eine weitere Steigerung der Genauigkeit des Nullmaßes erreicht wird. Wenn also das Kabel in die entsprechende Position gemäß der Figur 10 gebracht wurde, werden die Klingen 17.1, 17.2 orthogonal zur Längsachse A des Kabelendes bewegt und die Enden der Adern 2 entlang einer Schnittlinie y abgetrennt. Danach weisen die aus der Stützschelle 5 heraus ragenden Adern 2 eine exakte Länge relativ zur Stirnseite 5.1 der Stützschelle 5 auf.

Die Adern 2 werden darauffolgend abisoliert. Im Abstand von 2, 5 mm, ausgehend von dem jeweiligen Ende der Adern 2, werden nun die Isolierungen 2.2 eingeschnitten und dann entfernt. Danach werden an den Enden der Leiter 2.1 so genannte Innenleiter befestigt, beispielsweise mit einem Crimpprozess. Nachfolgend werden die Adern 2 zusammen mit den Innenleitern in einem Isolierkörper montiert. Die Innenleiter und der Isolierkörper sind in den Figuren nicht näher dargestellt.

Auf den Isolierkörper und die Stützschelle 5 sowie dem Mantel 6 wird sodann eine Hülse 7 gemäß der Figur 11 geschoben, wobei der Isolierkörper und die Innenleiter innerhalb der Hülse 7 in der Figur 11 nicht sichtbar rechts von der Stützschelle 5 angeordnet sind. Eine derartige Hülse 7 kann auch als Außenleiterhülse bezeichnet werden. Im vorliegenden Ausführungsbeispiel ist eine elektrisch leitende Hülse 7 gezeigt, die ein Kupplungsende 7.1 umfasst, das zur Herstellung einer Steckverbindung mit einem weiteren Kupplungsteil geeignet ist. Die Hülse 7 ist insbesondere in demjenigen Bereich, welcher die Stützschelle 5 umgibt, im Wesentlichen hohlzylindrisch ausgestaltet. Im Übrigen ist die Hülse 7 zumindest in ihrem hohlzylindrischen rohrförmigen Bereich geschlossen, weist also keinen über die gesamte Länge der Hülse 7 verlaufenden Schlitz auf.

Durch einen Crimpprozess wird darauffolgend ein elektrischer und mechanischer Verbund zwischen der Hülse 7 und der Stützschelle 5, die mit dem Schirm 4 elektrisch leitend verbunden ist, erzeugt. Zu diesem Zweck wird die am Kabel befindliche Hülse 7 zwischen Crimpstempel gelegt. Durch die Crimpstempel wird dann der hohlzylindrische Teil der Hülse 7 gegen die Stützschelle 5 in gewünschtem Maße verpresst.

Die Figur 12 zeigt einen Querschnitt C - C des Kabels aus der Figur 11. Es ist dort ersichtlich, dass die Hülse 7 ohne Zwischenlage direkt mit der Stützschelle 5 in Kontakt ist. In der Figur 12 ist der radiale Abstand B gezeigt, der bei dieser Ausführungsform der Wandstärke d der Stützschelle 5 entspricht. Der radiale Abstand B ist der Abstand zwischen dem Schirm 4 in einem Bereich an der Stirnseite 5.1 wo der Schirm 4 von der Stützschelle 5 umgeben ist und der Außenkontur der Stützschelle 5. Wie in der Figur 12 ersichtlich, ist dabei die radial äußere Kontur des Schirms 4 maßgeblich für den Ausgangspunkt des Abstandsmaßes. Auch wenn bedingt durch den Crimpprozess der Querschnitt der Stützschelle 5 nicht ideal ringförmig ausgestaltet sein mag, so ist der radiale Abstand B immer der radial nach außen weisende Abstand ausgehend von einem ersten Punkt P1 auf der Außenkontur des Schirms 4 bis zu einem zweiten Punkt P2 an der Außenkontur der Stützschelle 5, welcher radial außerhalb bezogen auf den ersten Punkt P1 liegt. Der Überstand 4.1 ist nach dem Abtrennen des Schirms 4 stets kürzer als der radiale Abstand B, auch wenn der Schirm 4 radial nach außen gestülpt ist. Diese hat zur Folge, dass das Ende Überstands 4.1 über den Umfang der Stützschelle 5 hinweg nicht die Außenkontur der Stützschelle 5 erreicht. Da im vorgestellten Ausführungsbeispiel der Überstand 4.1 nach dem Abtrennen des Schirms 4 über den Umfang gesehen überall gleich lang ist und die Außenkontur der Stützschelle 5 nicht erreichen kann, gilt, dass die Länge des Überstands U kleiner ist als der minimale radiale Abstand B, wobei B über den Umfang der Stützschelle 5 hinweg leichten Schwankungen unterliegen kann. Als Abstand B kann also im gezeigten Ausführungsbeispiel der minimale Abstand (beziehungsweise die minimale Wandstärke d) über den Umfang verstanden werden.

Das so ausgestaltete Kabel dient etwa in Fahrzeugen zur Übertragung von HF-Signalen (Hochfrequenz-Signalen). Bedingt durch die hohen Datenübertragungsraten, z. B. 480 Mbit/s, treten im Kabel hohe Spannungs-Frequenzen, in der Größenordnung von beispielsweise 40 MHz auf. Es hat sich nun gezeigt, dass durch das vorgestellte Verfahren und durch die dazugehörige Vorrichtung Kabel mit extremer Genauigkeit hergestellt werden können, so dass hohe Übertragungsqualitäten im Betrieb dieser Kabel erreichbar sind.

## Patentansprüche

1. Verfahren zur Herstellung eines Kabels, das zumindest eine Ader (2), einen Schirm (4), einen Mantel (6) und eine an den Schirm (4) elektrisch kontaktierte Hülse (7) aufweist, mit folgenden Schritten:
- Entfernen des Mantels (6) an einem Ende des Kabels, so dass dort der Schirm (4) freigelegt ist,
- Anbringen einer Stützschelle (5) in einer Weise, dass die Stützschelle (5) mit dem Schirm (4) elektrisch kontaktiert ist und am Ende des Schirms (4) ein Überstand (4.1) aus der Stützschelle (5) axial heraus ragt, wobei der von der Stützschelle (5) umgebene Schirm (4) einen radialen Abstand (B) zur Außenkontur der Stützschelle (5) aufweist,
- Abtrennen des Endes des Schirms (4) in einer Weise, dass nach dem Abtrennen die Länge (U) des Überstands (4.1) kürzer ist als der radiale Abstand (B) wenn der Schirm (4) radial nach außen gestülpt ist, wobei das Abtrennen mit Hilfe zumindest einer rotierenden Schneide (12.1) eines Werkzeugs (12), die um die Längsachse (A) des Endes des Kabels rotiert, erfolgt,
- Montieren der Hülse (7), so dass die Hülse (7) radial außerhalb der Stützschelle (5) angeordnet ist und mit der Stützschelle (5) elektrisch kontaktiert ist.

2. Verfahren gemäß dem Anspruch 1, wobei beim Abtrennen die Stützschelle (5) als Abstützung für den Schirm (4) zur Aufnahme von Bearbeitungskräften dient.

3. Verfahren gemäß einem der vorhergehenden Ansprüche, wobei durch ein Werkzeug (12) die dem Ende des Kabels zugewandte Stirnseite (5.1) der Stützschelle (5) materialabtragend bearbeitet wird.

4. Verfahren gemäß einem der vorhergehenden Ansprüche, wobei ein Rohr (15) vor dem Abtrennen des Schirms (4) mit Hilfe eines Antriebs unter Aufweitung des Schirms (4) entlang der Längsachse (A) des Endes des Kabels relativ zum Werkzeug (12) bewegt wird.

5. Verfahren gemäß dem Anspruch 4, das Abtrennen mit Hilfe eines Werkzeugs (12) erfolgt, welches eine Bohrung (12.2) aufweist, wobei das Rohr (15) innerhalb der Bohrung (12.2) angeordnet ist und das Werkzeug (12) entlang der Längsachse (A) des Endes des Kabels relativ zum Rohr (15) bewegt wird.

6. Verfahren gemäß einem der vorhergehenden Ansprüche, wobei das Ende der zumindest einen Ader (2) abgetrennt wird, wobei für die verbleibende Länge der zumindest einen Ader (2) die dem Ende des Kabels zugewandte Stirnseite (5.1) der Stützschelle (5) als Referenz dient.

7. Vorrichtung zum Herstellen eines Kabels, das zumindest eine Ader (2) und einen Schirm (4) aufweist, umfassend,
- ein Halteelement (13) zum Halten eines Endes des Kabels, so dass die Längsachse (A) des Endes des Kabels eine definierte Orientierung aufweist,
- ein Werkzeug (12), welches eine Bohrung (12.2) zur Aufnahme des Endes des Kabels aufweist, wobei
das Halteelement (13) so konfiguriert ist, dass dieses zum Halten eines Endes des Kabels an einem Außendurchmesser (D) des Endes des Kabels angreift, wobei dieser Außendurchmesser (D) größer ist als der Innendurchmesser der Bohrung (12.2) des Werkzeugs (12) **dadurch gekennzeichnet dass**,
das Werkzeug (12) als ein Fräser ausgestaltet ist und zumindest eine Schneide (12.1) zum Abtrennen des Schirms (4) aufweist, wobei die zumindest eine Schneide (12.1) um die Längsachse (A) des Endes des Kabels mit Hilfe eines Antriebs drehbar ist und mit Hilfe eines Vorschubantriebs eine Relativbewegung parallel zur Längsachse (A) zwischen der zumindest einen Schneide (12.1) und dem Ende des Kabels erzeugbar ist.

8. Vorrichtung gemäß dem Anspruch 7, wobei innerhalb der Bohrung (12.2) ein Rohr (15) angeordnet ist, wobei das Werkzeug (12) entlang der Längsachse (A) relativ zum Rohr (15) bewegbar ist.

9. Vorrichtung gemäß einem der Ansprüche 7 oder 8, wobei die zumindest eine Schneide (12.1) derart ausgestaltet ist, dass diese für eine materialabtragende Bearbeitung einer Stützschelle (5) aus einem Metallwerkstoff geeignet ist.

10. Vorrichtung gemäß einem der Ansprüche 7 bis 9, wobei die Vorrichtung
- ein Anschlagelement (16) aufweist, welches so ausgestaltet ist, dass es mit einer dem Ende des Kabels zugewandten Stirnseite (5.1) einer Stützschelle (5) in Anschlag bringbar ist,
- eine Abtrennvorrichtung (17) aufweist, wobei die Abtrennvorrichtung (17) zum Abtrennen der zumindest einen Ader (2) entlang einer Abtrennlinie (y) ausgebildet ist und relativ zum Anschlagelement (16) positioniert ist, so dass
die Abtrennlinie in einem definierten Abstand (R) zum Anschlagelement (16) verläuft.

11. Kabel, das zumindest eine Ader (2), einen Schirm (4), einen Mantel (6) und eine an den Schirm (4) elektrisch kontaktierte Hülse (7) aufweist, wobei eine Stützschelle (5) mit dem Schirm (4) elektrisch kontaktiert ist, wobei das Kabel gemäß einem Verfahren nach Anspruch 1 hergestellt ist und die dem Ende des Kabels zugewandte Stirnseite (5.1) der Stützschelle (5) materialabtragend bearbeitet ist.

12. Kabel gemäß dem Anspruch 11, wobei die Hülse (7) unmittelbar mit der Stützschelle (5) kontaktiert ist.

## Claims

1. Method for producing a cable which has at least one core (2), a shield (4), a jacket (6) and a sleeve (7) which is electrically contact-connected to the shield (4), the said method comprising the following steps:
- removing the jacket (6) from one end of the cable, so that the shield (4) is exposed there,
- fitting a supporting clip (5) in such a way that the supporting clip (5) makes electrical contact with the shield (4) and a protruding portion (4.1) projects axially out of the supporting clip (5) at the end of the shield (4), wherein the shield (4) which is surrounded by the supporting clip (5) is at a radial distance (B) from the outer contour of the supporting clip (5),
- cutting off the end of the shield (4) in such a way that, after the cutting-off operation, the length (U) of the protruding portion (4.1) is shorter than the radial distance (B) when the shield (4) is placed radially over the outside, wherein the cutting-off operation is performed with the aid of at least one rotating blade (12.1) of a tool (12) which rotates about the longitudinal axis (A) of the end of the cable,
- mounting the sleeve (7), so that the sleeve (7) is arranged radially outside the supporting clip (5) and makes electrical contact with the supporting clip (5).

2. Method according to Claim 1, wherein, during the cutting-off operation, the supporting clip (5) serves as a support for the shield (4) for absorbing working forces.

3. Method according to one of the preceding claims, wherein that end side (5.1) of the supporting clip (5) which faces the end of the cable is worked by a tool (12) such that material is removed.

4. Method according to one of the preceding claims, wherein, before the shield (4) is cut off, a tube (15) is moved relative to the tool (12) along the longitudinal axis (A) of the end of the cable, so as to widen the shield (4), with the aid of a drive.

5. Method according to Claim 4, the cutting-off operation is performed with the aid of a tool (12) which has a bore (12.2), wherein the tube (15) is arranged within the bore (12.2) and the tool (12) is moved relative to the tube (15) along the longitudinal axis (A) of the end of the cable.

6. Method according to one of the preceding claims, wherein the end of the at least one core (2) is cut off, wherein that end side (5.1) of the supporting clip (5) which faces the end of the cable serves as a preference for the remaining length of the at least one core (2).

7. Apparatus for producing a cable which has at least one core (2) and a shield (4), the said apparatus comprising
- a holding element (13) for holding one end of the cable, so that the longitudinal axis (A) of the end of the cable has a defined orientation,
- a tool (12) which has a bore (12.2) for receiving the end of the cable, wherein
the holding element (13) is designed such that, in order to hold one end of the cable, it acts on an outside diameter (D) of the end of the cable, wherein this outside diameter (D) is greater than the inside diameter of the bore (12.2) of the tool (12),
**characterized in that**
the tool (12) is configured as a milling cutter and has at least one blade (12.1) for cutting off the shield (4), wherein the at least one blade (12.1) can be rotated about the longitudinal axis (A) of the end of the cable with the aid of a drive, and a relative movement can be generated between the at least one blade (12.1) and the end of the cable parallel to the longitudinal axis (A) with the aid of a feed drive.

8. Apparatus according to Claim 7, wherein a tube (15) is arranged within the bore (12.2), wherein the tool (12) can be moved relative to the tube (15) along the longitudinal axis (A).

9. Apparatus according to either of Claims 7 and 8, wherein the at least one blade (12.1) is configured in such a way that it is suitable for working a supporting clip (5), which is composed of metal material, such that material is removed.

10. Apparatus according to one of Claims 7 to 9, wherein the apparatus has
- a stop element (16) which is configured such that it can be brought to a stop with an end side (5.1) of a supporting clip (5), which end side faces the end of the cable,
- a cutting-off apparatus (17), wherein the cutting-off apparatus (17) is designed to cut off the at least one core (2) along a cut-off line (y) and is positioned relative to the stop element (16), so that
the cut-off line runs at a defined distance (R) from the stop element (16).

11. Cable which has at least one core (2), a shield (4), a jacket (6) and a sleeve (7) which is electrically contact-connected to the shield (4), wherein a supporting clip (5) makes electrical contact with the shield (4), wherein the cable is produced in line with a method according to Claim 1 and that end side (5.1) of the supporting clip (5) which faces the end of the cable is worked such that material is removed.

12. Cable according to Claim 11, wherein the sleeve (7) makes direct contact with the supporting clip (5).

## Revendications

1. Procédé de fabrication d'un câble, lequel possède au moins un brin (2), un blindage (4), une gaine (6) et un manchon (7) en contact électrique contre le blindage (4), comprenant les étapes suivantes :
- enlèvement de la gaine (6) à une extrémité du câble, de sorte que le blindage (4) y soit dégagé,
- pose d'un collier support (5) d'une manière telle que le collier support (5) est mis en contact électrique avec le blindage (4) et qu'une projection (4.1) fait saillie dans le sens axial hors du collier support (5) à l'extrémité du blindage (4), le blindage (4) entouré par le collier support (5) présentant un écart radial (B) par rapport au contour extérieur du collier support (5),
- coupe de l'extrémité du blindage (4) d'une manière telle qu'après la coupe, la longueur (U) de la projection (4.1) est plus courte que l'écart radial (B) lorsque le blindage (4) est retourné dans le sens radial vers l'extérieur, la coupe étant réalisée à l'aide d'au moins une lame rotative (12.1) d'un outil (12), laquelle tourne autour de l'axe longitudinal (A) de l'extrémité du câble,
- montage du manchon (7) de telle sorte que le manchon (7) est disposé radialement à l'extérieur du collier support (5) et se trouve en contact électrique avec le collier support (5).

2. Procédé selon la revendication 1, le collier support (5), lors de la coupe, servant de support pour le blindage (4) pour absorber les forces d'usinage.

3. Procédé selon l'une des revendications précédentes, le côté frontal (5.1) du collier support (5) qui fait face à l'extrémité du câble étant usiné par enlèvement de matière à l'aide d'un outil (12).

4. Procédé selon l'une des revendications précédentes, un tube (15) étant déplacé par rapport à l'outil (12) le long de l'axe longitudinal (A) de l'extrémité du câble avant la coupe du blindage (4) à l'aide d'un mécanisme d'entraînement en élargissant le blindage (4).

5. Procédé selon la revendication 4, la coupe est réalisée à l'aide d'un outil (12) qui possède un alésage (12.2), le tube (15) étant disposé à l'intérieur de l'alésage (12.2) et l'outil (12) étant déplacé le long de l'axe longitudinal (A) de l'extrémité du câble par rapport au tube (15).

6. Procédé selon l'une des revendications précédentes, l'extrémité de l'au moins un brin (2) étant coupée, le côté frontal (5.1) du collier support (5) qui fait face à l'extrémité du câble servant de référence pour la longueur restante de l'au moins un brin (2).

7. Dispositif de fabrication d'un câble, lequel possède au moins un brin (2) et un blindage (4), comprenant :
- un élément de maintien (13) destiné à maintenir une extrémité du câble de telle sorte que l'axe longitudinal (A) de l'extrémité du câble présente une orientation définie,
- un outil (12) qui possède un alésage (12.2) destiné à accueillir l'extrémité du câble,
l'élément de maintien (13) étant configuré de telle sorte que pour maintenir le câble, celui-ci vient en prise au niveau d'un diamètre extérieur (D) de l'extrémité du câble, ce diamètre extérieur (D) étant plus grand que le diamètre intérieur de l'alésage (12.2) de l'outil (12),
**caractérisé en ce que**
l'outil (12) est réalisé sous la forme d'une fraise et possède au moins une lame (12.1) destinée à couper le blindage (4), l'au moins une lame (12.1) pouvant tourner autour de l'axe longitudinal (A) de l'extrémité du câble à l'aide d'un mécanisme d'entraînement et un mouvement relatif parallèle à l'axe longitudinal (A) pouvant être généré à l'aide d'un mécanisme d'entraînement d'avancement entre l'au moins une lame (12.1) et l'extrémité du câble.

8. Dispositif selon la revendication 7, un tube (15) étant disposé à l'intérieur de l'alésage (12.2), l'outil (12) pouvant être déplacé le long de l'axe longitudinal (A) par rapport au tube (15).

9. Dispositif selon l'une des revendications 7 ou 8, l'au moins une lame (12.1) étant configurée de telle sorte que celle-ci est adaptée à un usinage par enlèvement de matière d'un collier support (5) en un matériau métallique.

10. Dispositif selon l'une des revendications 7 à 9, le dispositif
- possédant un élément de butée (16) qui est configuré de telle sorte qu'il peut être amené en butée avec un côté frontal (5.1) d'un collier support (5) qui fait face à l'extrémité du câble,
- possédant un dispositif de coupe (17), le dispositif de coupe (17) étant configuré pour couper l'au moins un brin (2) le long d'une ligne de coupe (y) et étant positionné par rapport à l'élément de butée (16) de telle sorte que
la ligne de coupe s'étend à un écart (R) défini par rapport à l'élément de butée (16).

11. Câble, lequel possède au moins un brin (2), un blindage (4), une gaine (6) et un manchon (7) en contact électrique contre le blindage (4), un collier support (5) étant en contact électrique avec le blindage (4), le câble étant fabriqué conformément à un procédé selon la revendication 1 et le côté frontal (5.1) du collier support (5) qui fait face à l'extrémité du câble étant usiné par enlèvement de matière.

12. Câble selon la revendication 11, le manchon (7) étant en contact direct avec le collier support (5).
